# EUROPÄISCHE PATENTSCHRIFT

(11) **EP 3 882 552 B1**
(45) Veröffentlichungstag und Bekanntmachung des Hinweises auf die Patenterteilung: **23.08.2023**
(21) Anmeldenummer: 20164725.2
(22) Anmeldetag: 20.03.2020
(51) Int. Cl.: F28D 9/04, F28D 21/00, F28F 9/02, F24F 12/00

(54) **TAUSCHERVORRICHTUNG**
EXCHANGER APPARATUS
DISPOSITIF ÉCHANGEUR

(43) Veröffentlichungstag der Anmeldung: 22.09.2021
(73) Patentinhaber: Viessmann Climate Solutions SE, 35108 Allendorf (Eder) (DE)
(72) Erfinder: EVERTZ, Jörg, 8903 Birmensdorf (CH); EGGERT, Dominik, 8046 Zürich (CH); WERNER, Uwe, 8825 Hütten (CH)
(74) Vertreter: Clerc, Natalia

(56) Entgegenhaltungen:
- CN-A- 110 186 301
- DE-C1- 19 913 459
- US-A- 2 418 191
- US-A- 2 663 549
- US-A- 3 854 530
- US-A- 4 089 370
- US-A1- 2015 090 431

## Beschreibung

### TECHNISCHES GEBIET

Die vorliegende Erfindung betrifft eine Tauschervorrichtung, insbesondere einen Wärmetauscher und/oder einen Stofftauscher, sowie ein Verfahren zur Herstellung einer derartigen Vorrichtung.

### STAND DER TECHNIK

Wärmetauscher dienen der Übertragung von Wärme von einem Fluid auf ein anderes Fluid. Ebenso sind Vorrichtungen zum Austausch von Stoffen zwischen Fluiden bekannt, sogenannte Stofftauscher oder Filter. Bekannte Wärme- oder Stofftauscher weisen Strömungskanäle auf, durch die die Fluide strömen und die durch wärmedurchlässige bzw. -übertragende und/oder stoffdurchlässige Wände voneinander getrennt sind. Die Fluide sind je nach Anwendungsbereich im Gleichstrom, Gegenstrom, Kreuzstrom, Kreuzgegenstrom, Wirbelstrom oder Kombinationen davon geführt. Optimale Wirkungsgrade werden erreicht, wenn die wärme- oder stoffaustauschende Oberfläche möglichst gross ist.

Wärmetauscher finden in der Gebäudelüftung zwecks Wärmerückgewinnung vermehrten Einsatz. Dezentrale Lüftungssysteme setzen auf Einzelraumlüfter mit Wärmerückgewinnung. In diesen Systemen verfügt jeder Raum über einen üblicherweise in der Gebäudeaussenwand angebrachten Wärmetauscher, der direkt vom Gebäude-Innenraum nach aussen führt. Der Luftaustausch erfolgt mittels am oder im Wärmetauscher angebrachten Ventilatoren. Es gibt Geräte mit kontinuierlicher Betriebsweise und Pendellüfter, auch Push-Pull-Lüfter genannt, bei denen abwechslungsweise Innenluft nach aussen gefördert und Aussenluft nach innen transportiert wird.

EP 2 379 978 B1 offenbart einen Wärmetauscher mit je einem Fluidverteiler an jedem Ende, die auf einer Seite zwei konzentrische erste Zugänge und auf der gegenüberliegenden Seite zweite Zugänge in Form von Kreissektoren aufweisen. Der Übergang von den ersten Zugängen in die zweiten Zugänge erfolgt über Einschnitte und Ausstülpungen mit sinusförmigen Trajektorien.

WO 2016/096965 A1 zeigt einen Wärmetauscher mit mehreren Strömungszonen., wobei die mittlere Zone kreissektorförmige Kanäle aufweist. Auch WO 2019/017831 A1 verwendet kreissektorförmige Kanäle.

DE 20 2010008 955 U1 betrifft einen Gegenstrom-Wärmetauscher mit zwei Endkappen zur Einleitung des jeweils von einer Stirnseite her einströmenden Fluids in den entsprechenden Kanal. Der Grundkörper des Wärmetauschers weist Kanäle in Form von mehreren Kreissektoren auf oder er ist in der Form eines ein- oder mehrgängigen Wendels ausgebildet.

WO 2006/032258 A1 offenbart einen Wärmetauscher mit einem spiralförmig gewickelten blattförmigen Material. Die Windungen der Spirale bilden die Trennwände zwischen den von den Fluiden durchströmten Kanälen. Trennstege zischen benachbarten Windungen trennen die Kanäle zusätzlich.

DE 36 27 578 A1 beschreibt einen Wärmetauscher für Einzeltraumlüftung in Form einer Doppelspirale. Zuluft und Abluft werden über die Mantelfläche geführt. Diese Ausbildung verunmöglicht die Anordnung des Wärmetauschers in Hauswänden.

US 4 089 370 A, DE 199 13 459 C1, US 2015/0090431 A1, US 3 854 530 A und US 2 418 191 A offenbaren Wärmetauscher mit doppelspiralförmigen Tauschkörpern oder mit Tauschkörpern in Form von konzentrischen Ringen. US 4 089 370 A zeigt hierbei eine Tauschervorrichtung gemäß dem Oberbegriff von Anspruch 1.

Gerade bei Einzelraumlüftern, jedoch nicht nur dort, besteht das Bedürfnis, die Tauschervorrichtung möglichst klein und kompakt, insbesondere mit einem möglichst geringen Aussendurchmesser zu gestalten. Trotzdem soll die Tauschervorrichtung einen möglichst grossen Wirkungsgrad aufweisen und ihre Herstellung soll möglichst einfach und kostengünstig erfolgen.

### DARSTELLUNG DER ERFINDUNG

Es ist deshalb eine Aufgabe der Erfindung, eine verbesserte Tauschervorrichtung zu schaffen, die die oben genannten Bedürfnisse erfüllt.

Diese Aufgabe löst eine Tauschervorrichtung mit den Merkmalen des Anspruchs 1 sowie ein Verfahren zur Herstellung einer derartigen Tauschervorrichtung mit den Merkmalen des Anspruchs 14.

Die erfindungsgemässe Tauschervorrichtung weist ein erstes Endstück, ein zweites Endstück und einen dazwischen angeordneten Tauschkörper auf. Das erste Endstück weist eine erste Stirnseite mit einem ersten Eingang und einem ersten Ausgang auf und das zweite Endstück weist eine zweite Stirnseite mit einem zweiten Eingang und einem zweiten Ausgang auf. Die erste und die zweite Stirnseite sind vom Tauschkörper abgewandt. Der Tauschkörper weist mindestens einen ersten Kanal auf, der den ersten Eingang des ersten Endstücks mit dem zweiten Ausgang des zweiten Endstücks verbindet. Der Tauschkörper weist zudem mindestens einen zweiten Kanal auf, der den zweiten Eingang des zweiten Endstücks mit dem ersten Ausgang des ersten Endstücks verbindet. Erfindungsgemäss bildet der Tauschkörper eine Mehrfachspirale, insbesondere eine Doppelspirale auf, oder mehrere konzentrische Ringflächen, wobei die Windungen der Mehrfachspirale bzw. der konzentrischen Ringflächen Trennwände zwischen dem mindestens einen ersten und dem mindestens einen zweiten Kanal ausbilden.

Eine Doppelspirale oder Mehrfachspirale ist gemäss dem hier verwendeten Sprachgebrauch eine Struktur, die Querschnittsebenen eine um ein Zentrum gewickelte Linie ausbildet.

Ein Ausgang kann bei Benützung der Tauschervorrichtung auch als Eingang benützt werden. Der Eingang des gegenüberliegenden Endstücks wird dadurch zum Ausgang. Die Begriffe "Eingang" und "Ausgang" in diesem Text, insbesondere in den Patentansprüchen sind somit entsprechend auch als "Ausgang" und "Eingang" zu verstehen.

Dank der Ausbildung des Tauschkörpers ist die Tauschfläche für den Wärmeaustausch maximiert und der Wirkungsgrad optimiert. Das Strömungsverhalten der Fluide ist optimiert, so dass Schwingungen und dadurch auftretende störende Geräusche vermieden werden und die erforderliche Leistung des Lüfters minimiert werden. Die Windungen der Mehrfachspirale bzw. der konzentrischen Ringflächen verlaufen vorzugsweise konzentrisch. Die Ausbildung des Tauschkörpers als konzentrische Doppelspirale ist bevorzugt.

Die Vorrichtung lässt sich äusserst kompakt und mit kleinem Durchmesser ausbilden. Sie lässt sich beispielsweise in einer Gebäudewandbohrung mit einem Durchmesser von 160 mm einsetzen.

Die erfindungsgemässe Vorrichtung eignet sich beispielsweise zur Verwendung als Wärmetauscher, insbesondere für Einzelraumlüftungen oder in gebäudezentralen Lüftungsgeräten. Sie lässt sich jedoch bei geeigneter Wahl des Materials des Tauschkörpers beispielsweise auch als Stofftauscher mit Filter- oder Austauschfunktion einsetzen. Kombinationen von Wärmetauscher und Stofftauscher sind bei geeigneter Material des Tauschkörpers ebenfalls möglich. Derartige Materialien sind bekannt. Vorzugsweise ist der Tauschkörper aus einer Membran oder Folie gebildet. Es lassen sich beispielsweise Materialien mit reiner Wärmeleitungsfunktion, wie z.B. Aluminium, oder auch komplexere Membrane mit Wärmeleitungs- und Dampfdurchlässigkeits-Eigenschaften, sogenannte Enthalpietauscher, verwenden. Enthalpietauscher dienen der gleichzeitigen Wärmerückgewinnung und Luftfeuchtigkeitsrückgewinnung und verhindern bei Wohnraumlüftungen ein zu trockenes Raumklima.

Vorzugsweise wird die Vorrichtung im Gegenstrombetrieb verwendet. Sie lässt sich beispielsweise als kontinuierlich arbeitendes Einzelraumlüftungsgerät einsetzen, bei welchem gleichzeitig ein Luftstrom in das Gebäude ein- und ausströmt und im Gegensatz zu Pendellüftern im Push-Pull-Betrieb nur ein Gerät, bzw. eine Gebäudewandbohrung benötigt. Vorzugsweise sind auf einer oder auf beiden Stirnseiten der Vorrichtung Ventilatoren angebracht, um die Luft durch die Vorrichtung zu fördern. Die Ventilatoren lassen sich vorzugsweise in oder an den Endstücken befestigen.

Die erfindungsgemässe Vorrichtung lässt sich nicht nur für Luftströmungen, sondern auch für andere Fluidströmungen verwenden, insbesondere für Gase oder Flüssigkeiten, wie beispielsweise Wasser, oder für eine Mischung aus Gas als erstes Fluid und einer Flüssigkeit als zweites Fluid.

Vorzugsweise definiert der Tauschkörper eine Längsrichtung, wobei die Endstücke an je einem stirnseitigen Ende des Tauschkörpers angeordnet sind und wobei der mindestens eine erste und der mindestens eine zweite Kanal in Längsrichtung des Tauschkörpers durchströmbar sind. Diese Anordnung kann bei einem geringen Strömungswiderstand beziehungsweise bei einem geringen Druckverlust eine hohe Tauscherfläche bereitstellen und erreicht so einen hohen Tauscherwirkungsgrad bei kleiner Geräuschentwicklung.

Erfindungsgemäß ist mindestens eines der beiden Endstücke als Fluidverteiler ausgebildet und weist eine Verteilstruktur zur Umlenkung der Fluide auf. So weist vorzugsweise das erste Endstück eine Verteilerstruktur zur Umlenkung eines ersten Fluids vom ersten Eingang in den mindestens einen ersten Kanal des Tauschkörpers auf. Das zweite Endstück weist eine Verteilerstruktur zur Umlenkung eines zweiten Fluids vom zweiten Eingang in den mindestens einen zweiten Kanal des Tauschkörpers auf. Beide Endstücke weisen ihren erstgenannten Stirnseiten abgewandte Stirnseiten auf, die eine Mehrfachspirale, insbesondere eine Doppelspirale, oder konzentrische Ringflächen bilden. Diese Mehrfachspirale bzw. die konzentrische Ringflächenstruktur ist in ihrer Form, ihrer Anzahl Windungen und in ihrem Querschnitt vorzugsweise der Form und Ausbildung der Mehrfachspirale bzw. der konzentrischen Ringflächenstruktur des Tauschkörpers angepasst.

Die zwei Endstücke können gleich oder unterschiedlich ausgebildet sein. Die Ein- und Ausgänge jedes Endstücks können beispielsweise konzentrisch zueinander angeordnet sein, exzentrische Kreisflächen bilden oder die Form von zwei nebeneinander angeordneten Kreisflächen, Halbkreisen oder Kreissegmenten aufweisen. Jedes Endstück kann auch zwei oder mehr Ein- bzw. Ausgänge aufweisen.

Die Ausbildung der zwei Endstücke als Fluidverteiler mit den dem Tauschkörper zugewandten, als Mehrfachspirale bzw. als konzentrische Ringflächen ausgebildeten Stirnseiten vereinfacht die Herstellung. Die Endstücke lassen sich als separate Bauteile, beispielsweise aus Kunststoff im Spritzgussverfahren oder im 3D-Druckverfahren herstellen, und anschliessend beim Zusammenbau der Vorrichtung mit dem Tauschkörper verbinden. Der Tauschkörper kann dadurch in unterschiedlichen Längen und/oder mit unterschiedlichen Tauscheigenschaften (z.B. Wärme, Feuchtigkeit, Stoffe) angeboten werden. Es lassen sich dadurch mit denselben Grundelementen unterschiedliche Vorrichtungen fertigen. Dies vermindert die Herstellungskosten.

Die Herstellung wird zudem erleichtert, wenn die an den Endstücken ausgebildete Mehrfachspirale bzw. die konzentrische Ringflächenstruktur zu ihrer Mitte hin nach aussen vorsteht, beispielsweise indem sie konisch nach aussen vorstehend ausgebildet ist.

Die Vorrichtung lässt sich besonders einfach herstellen, wenn die Mehrfachspirale des Tauschkörpers durch mindestens zwei gemeinsam aufgewickelte Materialbahnen gebildet ist. Im Falle einer Doppelspirale sind genau zwei Materialbahnen gemeinsam konzentrisch aufgewickelt. In bevorzugten Ausführungsformen sind die Materialbahnen selbsttragend ausgebildet. Die Materialbahnen sind je nach Ausführungsform unterschiedlich ausgebildet. Beispielsweise sind sie zwischen den Endstücken eingespannt. In weiteren Ausführungsformen sind Abstandhalter zwischen den Windungen der Materialbahnen vorhanden.Die Abstandhalter erstrecken sich je nach Ausführungsform über die gesamte Länge des Tauschkörpers oder sie sind abschnittweise unterbrochen oder lediglich punktuell vorhanden. Vorzugsweise erstrecken sie sich in Längsrichtung der Vorrichtung. Die genannten Ausführungsformen lassen sich auch miteinander zu neuen Variante kombinieren.

Vorzugsweise verlaufen die Wände der Mehrfachspirale, insbesondere der Doppelspirale, über die gesamte Länge des Tauschkörpers gleichabständig voneinander. Die Abstände können jedoch im Querschnitt des Tauschkörpers und/oder entlang seiner Längsrichtung auch variieren. Vorzugsweise weist die Spirale einen im wesentlichen kreisförmigen Querschnitt auf. In anderen Ausführungsformen sind die Windungen jedoch derart, dass die Spirale einen dreieckigen, viereckigen, quadratischen, sechseckigen, achteckigen oder zwölfeckigen Querschnitt aufweist. Es lassen sich jedoch auch beliebig andere polygonale Querschnitte und auch nicht symmetrische Formen verwenden.

Je nach Ausführungsform verlaufen die Wände der Doppelspirale über alle Windungen gebogen. Sie können jedoch auch abschnittsweise geradlinig oder nach aussen gekrümmt verlaufen und in Form von abgerundeten oder scharfen Kanten gebogen sein.

Auch die Endstücke können entsprechende Querschnittsformen aufweisen.

Nicht runde Formen erleichtern die Stapelbarkeit und damit die Lagerhaltung der Vorrichtung. Derartig stapelbare Vorrichtungen lassen sich auch als Mehrfacheinrichtung in Serie oder parallelgeschaltet in Anlagen verwenden. Runde Formen erleichtern die Verwendung in Gebäudebohrungen. Vorzugsweise weist die Vorrichtung oder zumindest der Tauschkörper über die gesamte Länge gleichbleibende äussere Abmessungen auf. In anderen Ausführungsformen verändern sich die äusseren Abmessungen, beispielsweise verändert sich der äussere Durchmesser.

Wie bereits erwähnt lassen sich unterschiedliche Materialien für den Tauschkörper verwenden. Vorzugsweise ist die Mehrfachspirale bzw. die konzentrische Ringstruktur des Tauschkörpers aus mindestens einer Enthalpietauscher-Membran gebildet. Diese Membran bildet eine Tauschfläche.

In bevorzugten Ausführungsformen weist der Tauschkörper eine Tauschfläche auf zum Austausch von Wärme und/oder Stoffen und die Tauschervorrichtung weist eine Durchgangsöffnung auf, die sich vom ersten Endstück durch den Tauscherkörper zum zweiten Endstück erstreckt und die getrennt von der Tauschfläche verläuft. Dadurch ist ein Fluidfluss ermöglicht, der keinem Wärmeaustausch oder Stoffaustausch unterliegt. Vorzugsweise ist die Vorrichtung wahlweise im wärme- und/oder stofftauschenden Modus betreibbar oder im Bypassmodus durch die genannte Durchgangsöffnung. Der Bypassmodus ist beispielsweise dann wünschenswert, wenn in Sommernächten in den Raum eingesaugte Luft nicht erwärmt werden soll. Diese Vorrichtung erleichtert ein Abkühlen des Gebäudes.

Die Vorrichtung lässt sich auf unterschiedliche Weise herstellen. Sie kann einstückig oder mehrstückig ausgebildet sein und beispielsweise im Spritzgussverfahren oder im 3D-Druckverfahren hergestellt werden. Weist der Tauschkörper Materialbahnen auf, so eignet sich insbesondere nachfolgend erwähntes erfinderisches Verfahren.

In diesem Verfahren zur Herstellung der oben beschriebenen Tauschervorrichtung werden das erste Endstück und das zweite Endstück in einem definierten Abstand zueinander angeordnet. Zur Bildung der Mehrfachspirale, insbesondere der Doppelspirale, des Tauschkörpers werden mindestens eine erste Materialbahn von einer ersten Seite und mindestens eine zweite Materialbahn von einer zweiten Seite gemeinsam aufgewickelt. Die zwei stirnseitigen Enden der aufgewickelten Materialbahnen werden während oder nach dem Aufwickeln mit dem ersten und/oder dem zweiten Endstück verbunden. In bevorzugten Varianten des Verfahrens wird eine Abdeckung mindestens über den Mantel der zur Mehrfachspirale aufgewickelten Materialbahnen angeordnet. In anderen Varianten des Verfahrens werden die Materialbahnen am Ende des Aufwickelvorgangs ohne Beabstandung zueinander vorzugsweise mehrfach aufgewickelt. Sie bilden so einen Abschluss, d.h. eine geschlossene Mantelfläche, welche die Funktion einer Abdeckung übernimmt. Vorteilhaft in dieser Variante ist, wenn die Materialbahnen selbsttragend sind.

Die Materialbahnen sind dabei vorzugsweise Membrane. Weisen die Endstücke zum Zentrum hin vorstehende Spiralstrukturen auf, so wird die Membran vorzugsweise nach aussen hin breiter. Dies erleichtert das Aufwickeln auf die Endstücke. Vorzugsweise werden die Materialbahnen bereits während des Aufwickelns auf die Endstücke mit diesen verbunden, beispielsweise verklebt oder verschweisst. Die Abdeckung ist beispielsweise eine über dem Tauschkörper und je nach Ausführungsform auch über die Endstücke gestülpte Hülse. Vorzugsweise besteht die Abdeckung jedoch aus zwei halbzylinderförmigen Schalen, welche mindestens über den Tauschkörper gestülpt werden können und vorzugsweise an den zwei Endstücken fixierbar sind.

Die Materialbahnen sind je nach Variante des Verfahrens bereits in ihrer Form vorgefertigt oder sie werden kurz vor oder während des Aufwickelns zugeschnitten.

Weitere Ausführungsformen und Varianten des Verfahrens sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine Explosionsdarstellung einer erfindungsgemässen Tauschervorrichtung ohne Ventilatoren und Motoren;
- Figur 2: eine perspektivische Darstellung der Tauschervorrichtung gemäss Figur 1 im zusammengesetzten Zustand;
- Figur 3: eine perspektivische Darstellung eines Teils der Tauschervorrichtung gemäss Figur 2;
- Figur 4: einen Teilschnitt durch die Tauschervorrichtung gemäss Figur 2;
- Figur 5: eine perspektivische Ansicht eines Endstücks der Tauschervorrichtung gemäss Figur 2 von einer ersten Stirnseite;
- Figur 6: eine perspektivische Ansicht des Endstücks gemäss Figur 5 von der gegenüberliegenden Stirnseite;
- Figur 7: eine Ansicht des Endstücks gemäss Figur 5 von der ersten Stirnseite;
- Figur 8: eine Ansicht des Endstücks gemäss Figur 5 von der gegenüberliegenden Stirnseite;
- Figur 9: eine Ansicht einer Materialbahn der Tauschervorrichtung gemäss Figur 1;
- Figur 10: einen Teilschnitt durch einen Teil der Tauschervorrichtung gemäss Figur 2 mit Darstellung einer Strömung eines ersten Fluidstroms;
- Figur 11: einen Teilschnitt durch einen Teil der Tauschervorrichtung gemäss Figur 2 mit Darstellung einer Strömung eines zweiten Fluidstroms;
- Figur 12: einen Teilschnitt durch die Tauschervorrichtung gemäss Figur 2 mit eingebauten Ventilatoren gemäss einer ersten Ausführungsform;
- Figur 13: einen Längsschnitt durch die Vorrichtung gemäss Figur 12;
- Figur 14: einen Teilschnitt durch die Tauschervorrichtung gemäss Figur 2 mit eingebauten Ventilatoren gemäss einer zweiten Ausführungsform;
- Figur 15: einen Längsschnitt durch die Vorrichtung gemäss Figur 14;
- Figuren 16a bis 16f: verschiedene Varianten von Wicklungen eines Tauschkörpers der Tauschervorrichtung gemäss Figur 1;
- Figuren 17a bis 17f: verschiedene Varianten von Ein- und Ausgängen der Endstücke der Tauschervorrichtung gemäss Figur 1;
- Figur 18: eine erfindungsgemässe Anordnung zur Herstellung der Tauschervorrichtung gemäss Figur 2;
- Figuren 19a bis 19f: Querschnitte durch ein erstes Endstück der Tauschervorrichtung gemäss Figur 1 in Abständen entlang einer Längsachse und
- Figuren 20a bis 20f: Querschnitte durch ein zweites Endstück der Tauschervorrichtung gemäss Figur 1 in Abständen entlang einer Längsachse.

Gleiche Teile sind mit gleichen Bezugszeichen versehen.

### BESCHREIBUNG BEVORZUGTER AUSFÜHRUNGSFORMEN

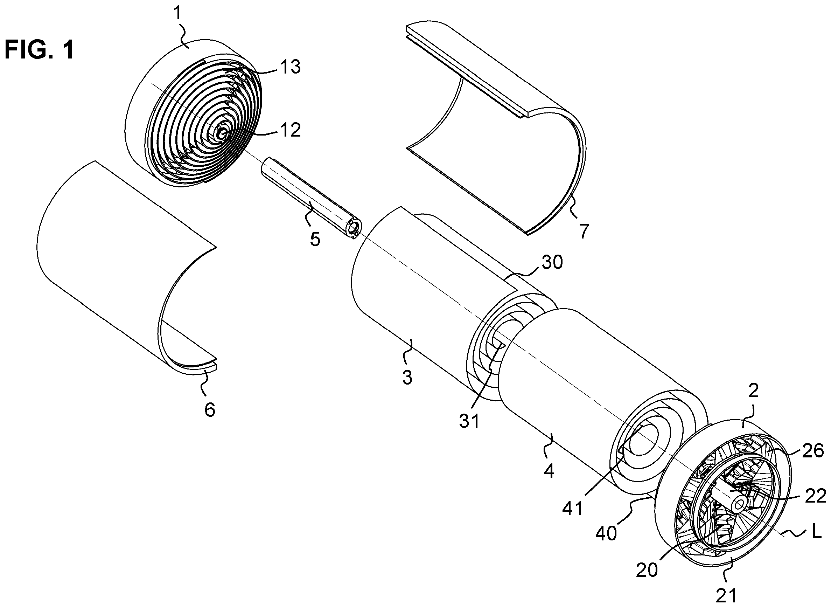

In Figur 1 ist eine erste Ausführungsform einer erfindungsgemässen Tauschervorrichtung dargestellt, jedoch ohne Ventilatoren. Die hier dargestellte Vorrichtung dient der Verwendung als Wärmetauscher, vorzugsweise mit Feuchtigkeitsrückgewinnung. Sie lässt sich jedoch in gleicher Form auch als Stofftauscher einsetzen.

Die Vorrichtung weist ein erstes Endstück 1 und ein zweites Endstück 2 und einen zwischen diesen zwei Endstücken 1, 2 angeordneten Tauscherkörper 3, 4 auf. Die zwei Endstücke 1, 2 sind vorzugsweise aus Kunststoff oder einem Metall gefertigt und sie sind vorzugsweise steif ausgebildet. Bevorzugterweise weisen sie einen runden Querschnitt auf. Der Tauscherkörper weist vorzugsweise eine Doppelspirale auf, hier in Form von zwei konzentrisch um einen Stab 5 aufgewickelte Materialbahnen 3, 4. Die Materialbahnen dienen der Wärmeübertragung und vorzugsweise auch dem Feuchtigkeitsaustausch. Sie sind aus einem gut wärmeleitenden Material gefertigt, beispielsweise aus Aluminium oder einer Enthalpietauscher-Membran. Andere Materialien sind aus dem Stand der Technik bekannt und lassen sich hier ebenfalls verwenden. Es lassen sich auch Schichtmaterialien verwenden. Die zwei Materialbahnen 3, 4 sind vorzugsweise selbsttragend. In anderen Ausführungsformen sind die zwei Materialbahnen 3, 4 nicht selbsttragend, sondern sie sind zwischen den zwei Endstücken 1, 2 verspannt. Der Tauscherkörper ist von einer Abdeckung, hier in Form von einem halbzylinderförmigen ersten und zweiten Deckelteil 6, 7 umgeben. Die Abdeckung ist vorzugsweise steif ausgebildet.

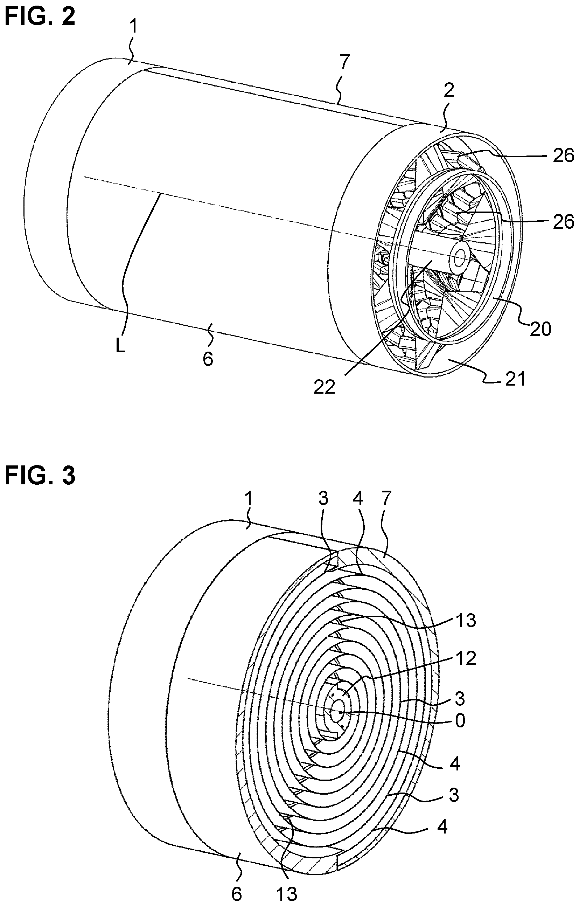

Wie in Figur 2 erkennbar ist, bildet die erfindungsgemässe Vorrichtung im zusammengesetzten Zustand einen Kreiszylinder, vorzugsweise mit einem über seine Längsachse L gleichbleibenden Aussendurchmesser. Die zwei Materialbahnen 3, 4 sind derart konzentrisch aufgewickelt, dass sie eine gemeinsame Doppelspirale ausbilden.

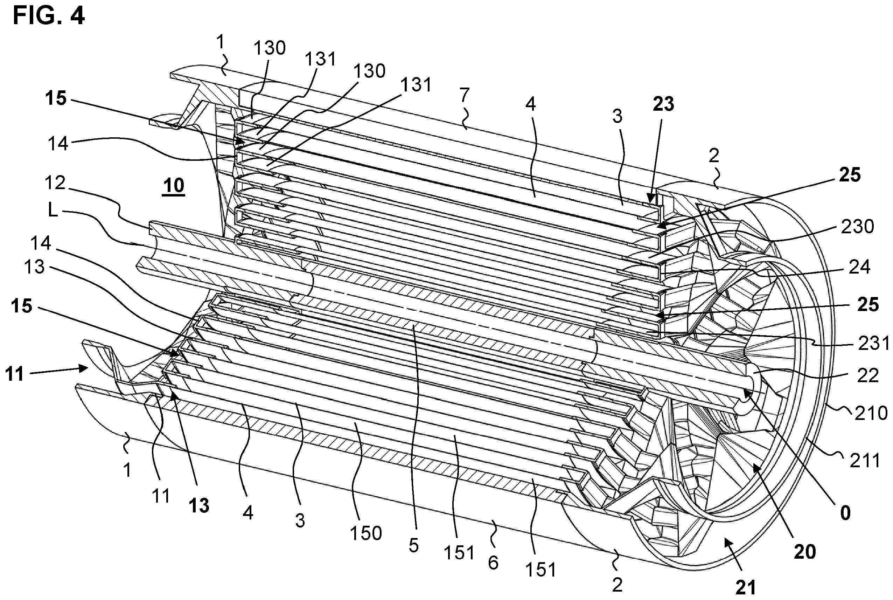

Wie in Figur 1 erkennbar ist, bildet das erste Endstück 1 auf seiner dem Tauschkörper zugewandten Stirnseite ebenfalls eine Doppelspirale 13 aus. Dasselbe gilt für das zweite Endstück 2, dessen entsprechende Stirnseite in Figur 1 nicht erkennbar ist, jedoch beispielsweise in Figur 4 dargestellt ist.

In Figur 3 ist erkennbar, wie die Materialbahnen 3, 4 passend zur Doppelspirale 13 des ersten Endstücks 1 gewickelt sind. Entsprechend sind sie auch passend zur identischen Doppelspirale 23 des zweiten Endstücks 2 gewickelt.

Der Längsschnitt gemäss Figur 4 zeigt, dass die erste Materialbahn 3 auf ersten Spiralrippen 130 der Doppelspirale 13 aufliegt und die zweite Materialbahn 4 auf zweiten Spiralrippen 131 der Doppelspirale 13. (ich habe die Bezugszeichen 3, 4 in Figur 4 gewechselt und den Text gleich gelassen. Aus meiner Sicht ist dies konsistent mit den übrigen Zeichnungen, ich bitte jedoch um Überprüfung) Vorzugsweise sind sie mit den Rippen 130, 131 verklebt, verschweisst oder auf andere Art und Weise an diesen befestigt. Dasselbe gilt für die gegenüberliegende Stirnseite der Materialbahnen 3, 4 in Bezug auf das zweite Endstück 2. Auch dieses weist erste und zweite Spiralrippen 230, 231 der zweiten Spiralbahn 23 auf.

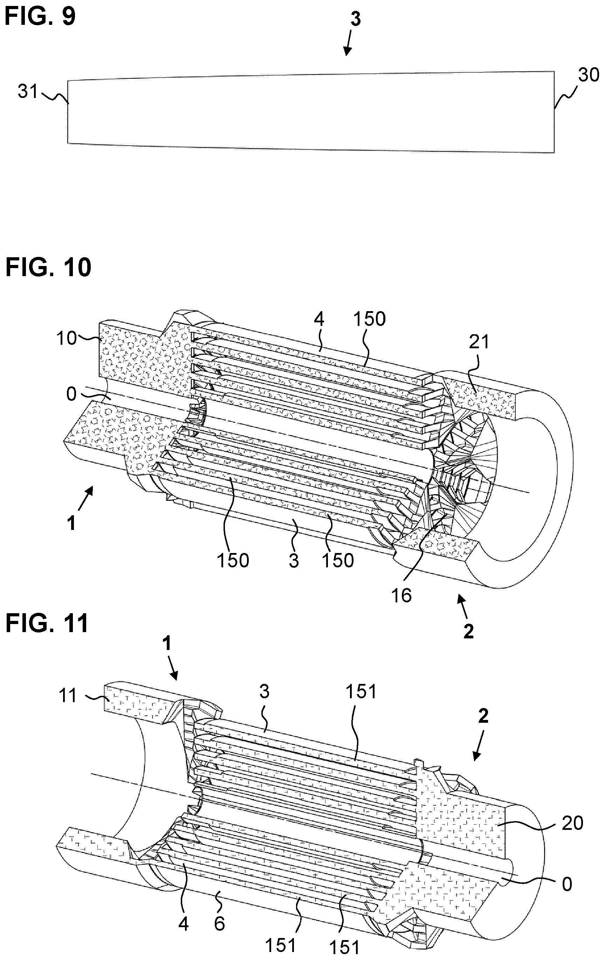

Die Spiralrippen 130, 131 bzw. 230, 231 sind unterschiedlich lang ausgebildet. Sie sind zur Längsachse L hin länger, so dass die Doppelspiralen 13, 23 der zwei Endstücke je eine konusförmige Struktur bilden, die stirnseitig vorsteht und zum Tauschkörper hin gerichtet ist. Die Materialbahnen 3, 4 sind entsprechend nicht rechteckförmig ausgebildet, sondern trapezförmig, wie in Figur 9 anhand der ersten Materialbahn 3 erkennbar ist. Die zweite Materialbahn 4 ist vorzugsweise identisch ausgebildet. Das schmalere Ende 31 wird auf den Stab 5 befestigt. Das breitere Ende 30 bildet den äusseren Abschluss der Spirale. Dasselbe gilt für die zweite Materialbahn 4. Auch diese zweite Bahn 4 weist schmaleres Ende 41 und ein breiteres Ende 40 auf.

Die Wände der Materialbahnen 3, 4 dienen als Trennwände für einen ersten spiralförmigen Kanal 150 und einen zweiten spiralförmigen Kanal 151. Beide Kanäle 150, 151 erstrecken sich über die gesamte Länge des Tauscherkörpers und bilden die Kontakfläche für den Wärmeaustausch und gegebenenfalls auch die Filterfläche für den Stoffaustausch.

Wie in Figur 4 erkennbar ist, sind an beiden Stirnseiten Zugänge 15, 25 in die Kanäle 150, 151 und stirnseitige Verschlüsse 14 der Kanäle 150, 151 vorhanden. Auch das zweite Endstück 2 weist entsprechende Verschlüsse 24 auf.

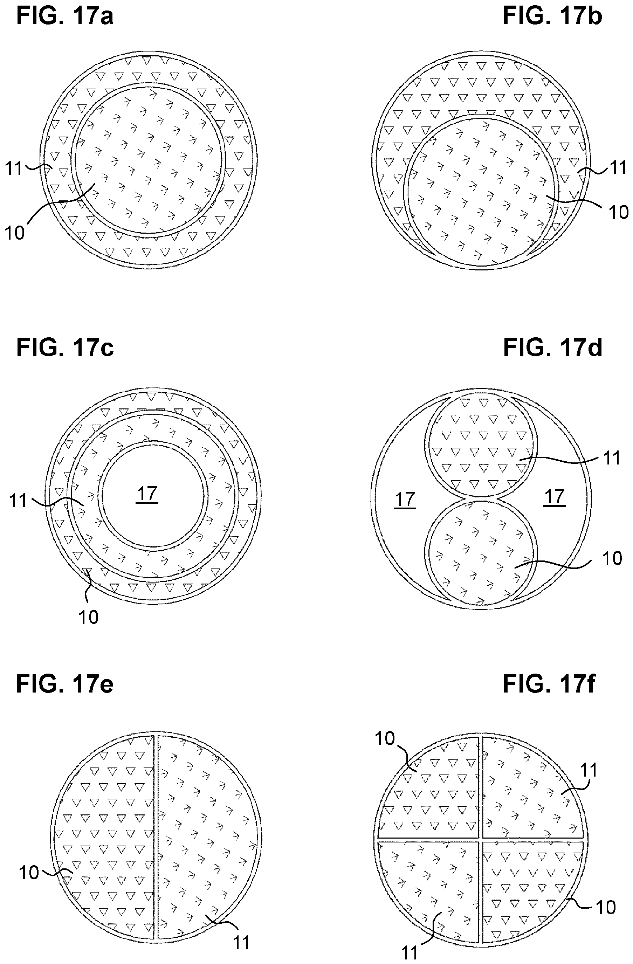

Die zwei Endstücke 1, 2 weisen auf ihren dem Tauschkörper abgewandten und nach aussen gerichteten Stirnseiten Ein- und Ausgänge für durchströmende Fluide auf. im Endstück 1 ist ein erster Eingang mit dem Bezugszeichen 10 versehen und ein erster Ausgang mit dem Bezugszeichen 11. Im Endstück 2 ist ein zweiter Eingang mit dem Bezugszeichen 20 versehen und ein zweiter Ausgang mit dem Bezugszeichen 21. Die Ein- und Ausgänge können jedoch je nach Verwendung auch vertauscht sein. Wird die Tauschervorrichtung nicht im Gegenstrom, sondern im Gleichstrom betrieben, so weist ein Endstück zwei Eingänge und das andere Endstück zwei Ausgänge auf. Die Begriffe sind in der Beschreibung und in den Patentansprüchen deshalb entsprechend flexibel zu verstehen, d.h. ein Eingang kann je nach Betriebsart auch ein Ausgang sein. Die Ein- und Ausgänge sind in diesem Beispiel konzentrisch zueinander angeordnet. D.h. der innere Zugang ist kreisförmig, der andere Zugang umgibt diesen in Bezug auf die Längsachse L konzentrischen Kreis als konzentrischen Kreisring. Dies ist eine bevorzugte Ausführungsform. Andere Ausführungsformen sind jedoch möglich, wie dies in den Figuren 17a bis 17f dargestellt ist. Diese Figuren werden weiter unten im Text noch näher beschrieben.

Die zwei Endstücke 1, 2 weisen zwischen ihrem Eingang 10, 20 und Ausgang 11, 21 auf der einen Stirnseite und der Doppelspirale 13, 23 auf der anderen Stirnseite eine Fluidverteilerstruktur 16, 26 auf. Diese Verteilerstruktur 16, 26 dient dazu, ein über den Eingang 10, 20 einströmendes Fluid derart in die zugehörige Doppelspirale 13, 23 zu lenken, dass es in den für diese Strömungsrichtung gewählten Kanal 150, 151 gelangt. Die Verteilerstruktur 16, 26 im gegenüberliegenden Endstück 1, 2 führt das durchgeströmte Fluid aus dem Kanal 150, 151 in den Ausgang 11, 21 dieses gegenüberliegenden Endstücks 1, 2 zu.

Wie somit in Figur 4 gut erkennbar ist, strömen die im Gegenstrom geleiteten Fluide, getrennt durch die Wände der Materialbahnen 3, 4, aneinander vorbei, ohne sich zu vermischen. Die Fluide strömen im Tauschkörper mehrheitlich nicht entlang der Spiralwindungen, sondern direkt in Längsrichtung L der Tauschervorrichtung.

In Figur 10 ist die Strömung des ersten Fluids durch den ersten Fluidkanal 150 dargestellt, in Figur 11 die Strömung des zweiten Fluids durch den zweiten Fluidkanal 151. Die Zusammenschau der zwei Figuren zeigt, dass sich die Fluide nicht miteinander vermischen, dass sie jedoch dank der Doppelspirale des Tauschkörpers eine grosse gemeinsame Kontaktfläche beaufschlagen.

Der Längsschnitt gemäss Figur 4 zeigt ferner, dass der Stab 5 an einem Stift 12 des ersten Endstücks 1 und an einem Stift 22 des zweiten Endstücks 2 anschliesst. Vorzugsweise ist er mit diesen verbunden, beispielsweise mittels einer Steckverbindung. Der Stab 5 und die zwei Stifte 12, 22 sind vorzugsweise hohl ausgebildet und umgeben eine sich über die gesamte Länge der Vorrichtung erstreckende Durchgangsöffnung O.

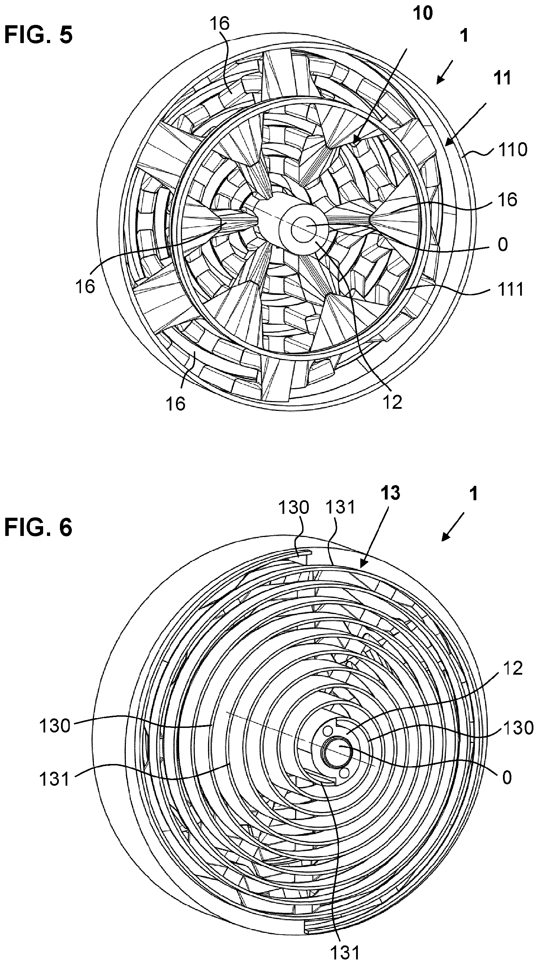

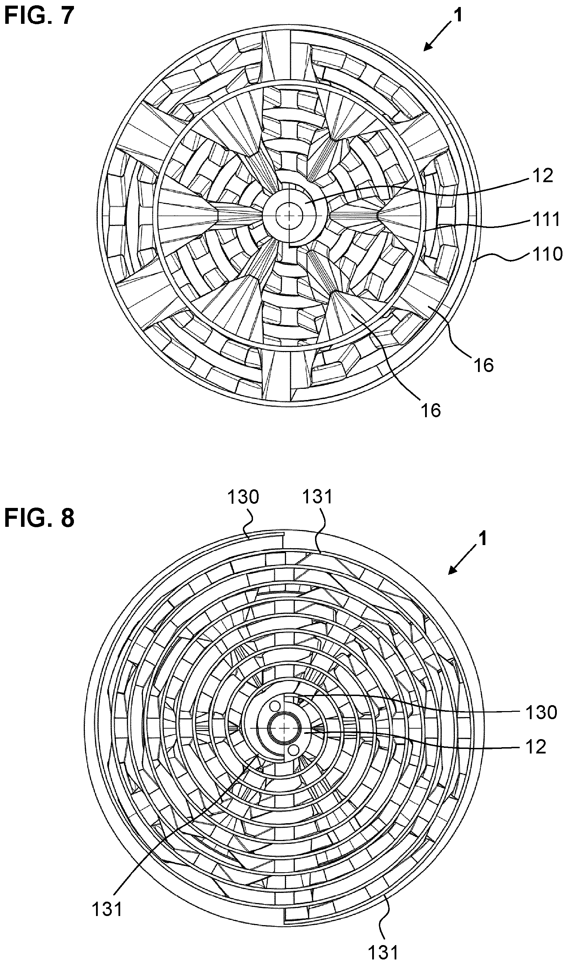

Die zwei Stirnseiten des ersten Endstücks 1 sind in den Figuren 5 bis 8 im Detail dargestellt. Das zweite Endstück 2 ist analog oder ähnlich ausgebildet. Die Verteilerstruktur 16 wird hier nicht im Detail beschrieben. Sie hängt von der Anordnung der Ein- und Ausgänge 10, 11, 20, 21 ab und davon, ob eine Doppel-, eine Dreifachspirale oder eine andere Art von Mehrfachspirale verwendet wird. Auch die Form der Spirale beeinflusst die Gestaltung der Verteilerstruktur 16. Diese Struktur lässt sich jedoch basierend auf diesen geometrischen Vorgaben mit üblichen Methoden berechnen.

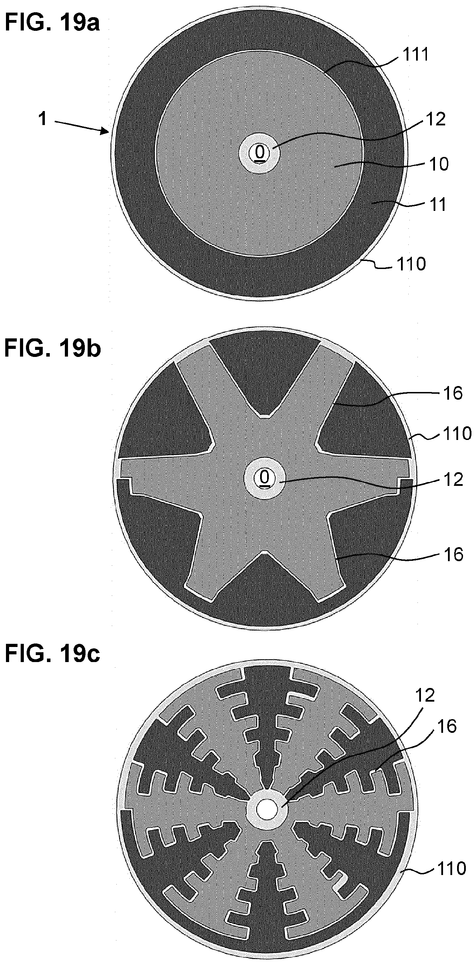

In den Figuren 19a bis 19f ist für das erste Endstück 1 dargestellt, wie die Verteilerstruktur 16 die zwei Durchgänge für die Fluide von der ersten Stirnseite zur gegenüberliegenden Stirnseite ändert. Die zwei Durchgänge sind in unterschiedlichen Grautöne dargestellt.

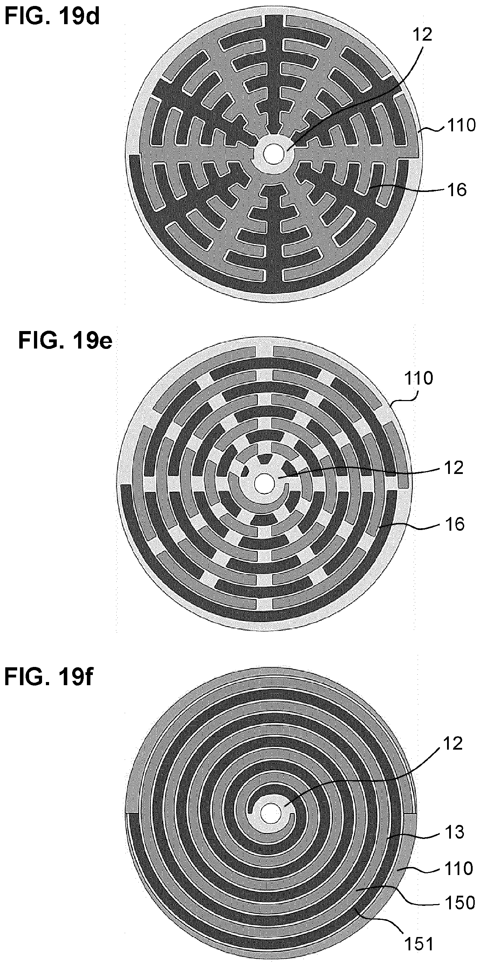

In allen Figuren 19a bis 19f ist der Durchgang O durch den Stift 12 unverändert. In Figur 19a ist der äussere Ring des ersten Endstücks 1 mit dem Bezugszeichen 110 versehen. Ein innerer Ring 111 unterteilt diese erste Stirnseite in den kreisförmigen Eingang 10 und den ringförmigen Ausgang 11. In Figur 19b ist ein Querschnitt durch die Verteilerstruktur 16 in einem ersten Abstand zur äusseren ersten Stirnseite dargestellt. Wie erkennbar ist, hat sich die Verteilerstruktur 16 beginnend mit der Form gemäss dem inneren Ring 111 sich zu einer sternförmigen Struktur verändert, die den ringförmigen Ausgang nun in einzelne getrennte Bereiche unterteilt. Ein Querschnitt gemäss Figur 19c, erstellt in einem grösseren Abstand zur äusseren ersten Stirnseite, zeigt eine Verästelung der Verteilerstruktur 16 bei gleichbleibender sternförmigen Unterteilung. Die Verästelung wird mit vergrösserndem Abstand zur äusseren Stirnseite stärker, wie in Figur 19d dargestellt ist. Ringförmige bzw. ringsegmentförmige Strukturen, wie in Figur 19e gezeigt, bilden sich bei Annäherung an die zweite gegenüberliegende Stirnseite des ersten Endstücks 1 aus, bis gemäss Figur 19f die doppelspiralförmige Struktur erhalten wird, die beispielsweise in Figur 6 gut erkennbar ist.

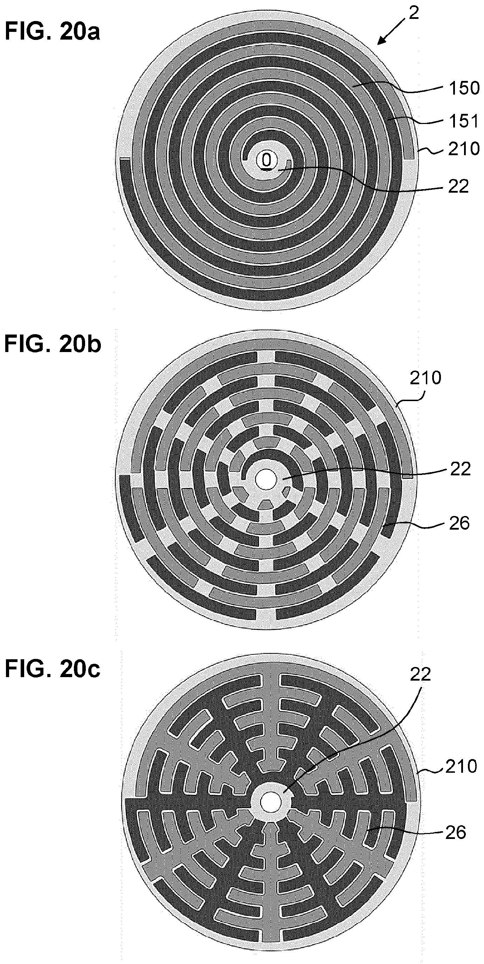

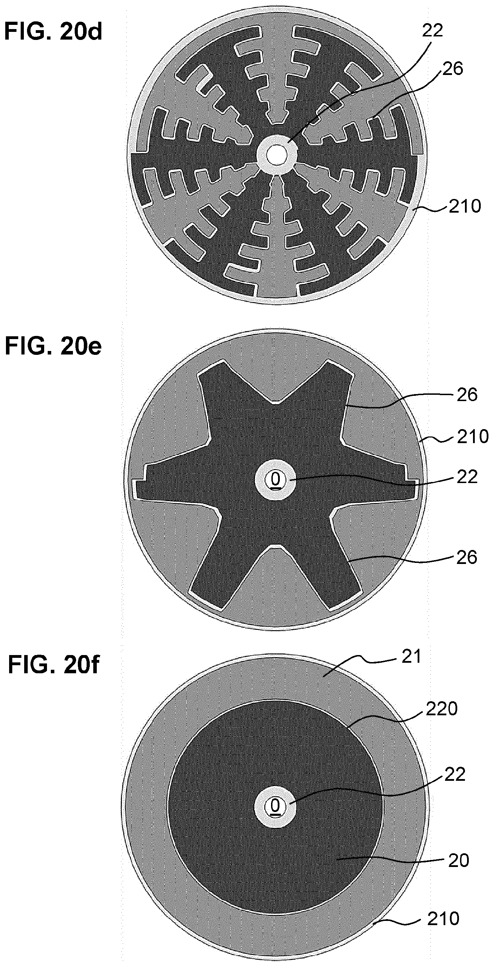

In den Figuren 20a bis 20f ist, nun ausgehend von der dem Tauschkörper zugewandten Stirnseite des zweiten Endstücks 2, wiederum die Veränderung der Durchgänge für die Fluide im zunehmenden Abstand zu dieser Stirnfläche gezeigt. Durch Vergleich mit den Figuren 19a bis 19f zeigt sich, dass die Verteilerstruktur 26 des zweiten Endstücks 2 dieselben strukturellen Veränderungen der Durchgänge vornimmt und somit von der Doppelspirale gemäss Figur 20a in die konzentrisch angeordneten Ein- und Ausgänge 21, 20 überführt.. In dieser Transition von spiralförmigen Kanälen auf beispielsweise Kreisringe wird die Querschnittsfläche pro Kanal an jedem Ort in Längsrichtung vorzugsweise annähernd gleich gross gestaltet um einem erhöhten Druckverlust durch Einschnürung der Strömung entgegenzuwirken. Dabei gelangt in diesem Beispiel das Fluid, das durch den kreisförmigen Eingang 10 des ersten Endstücks 1 in die Vorrichtung eingeströmt ist, nun in den ringförmigen Ausgang 21 des zweiten Endstücks 2 und das Fluid, das durch den kreisförmigen Eingang 20 des zweiten Endstücks 2 einströmt, in den ringförmigen Ausgang 11 des ersten Endstücks 1. Durch diese Art der Durchströmung ergibt sich für beide Strömungskanäle derselbe Strömungswiderstand und eine gleichmässige Strömungsgeschwindigkeit an allen Stellen in den Luft-Kanälen. An jeder Stelle im Endstück gilt vorzugsweise in Näherung
Querschnittsfläche des kreisförmigen Eingangs 10 =
Querschnittsfläche des ringförmigen Ausgangs 11 = konstant
(bei gleichen Volumenströmen und identischen Fluiden).

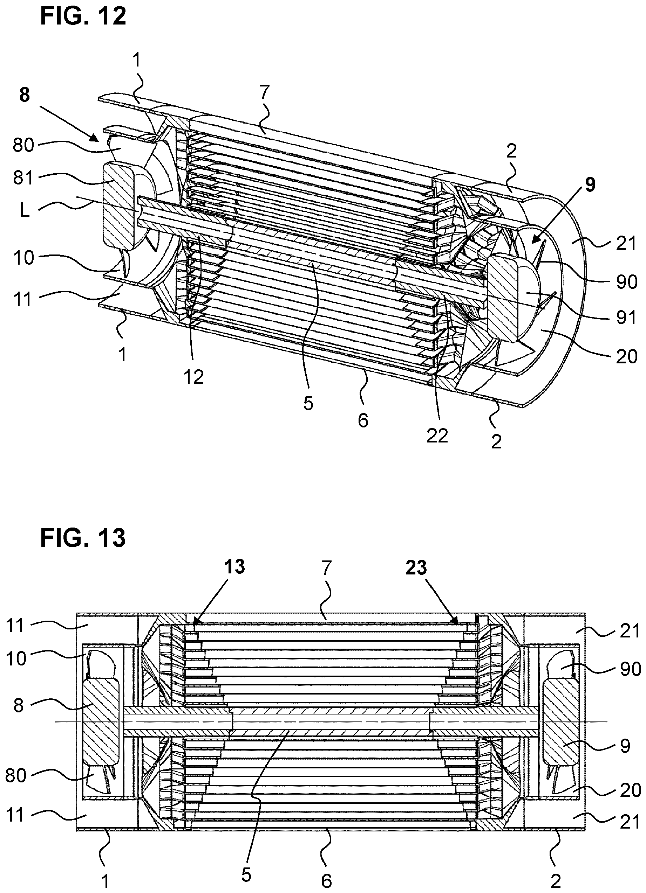

Die bisherigen Figuren haben die Vorrichtung ohne Ventilatoren gezeigt. Bei derartigen Tauschervorrichtungen werden die Fluide jedoch üblicherweise aktiv gefördert, beispielsweise durch mindestens einen Ventilator. In den Figuren 12 und 13 ist deshalb eine erste Ausführungsform mit zwei Ventilatoren dargestellt. Ein erster Ventilator 8 mit Ventilatorflügeln 80 und einem Motor 81 ist konzentrisch zur Längsachse L angeordnet. Auf der gegenüberliegenden Seite ist ein zweiter Ventilator 9 mit Ventilatorflügeln 90 und einem Motor 91 ebenfalls in konzentrischer Anordnung zur Längsachse L vorhanden.

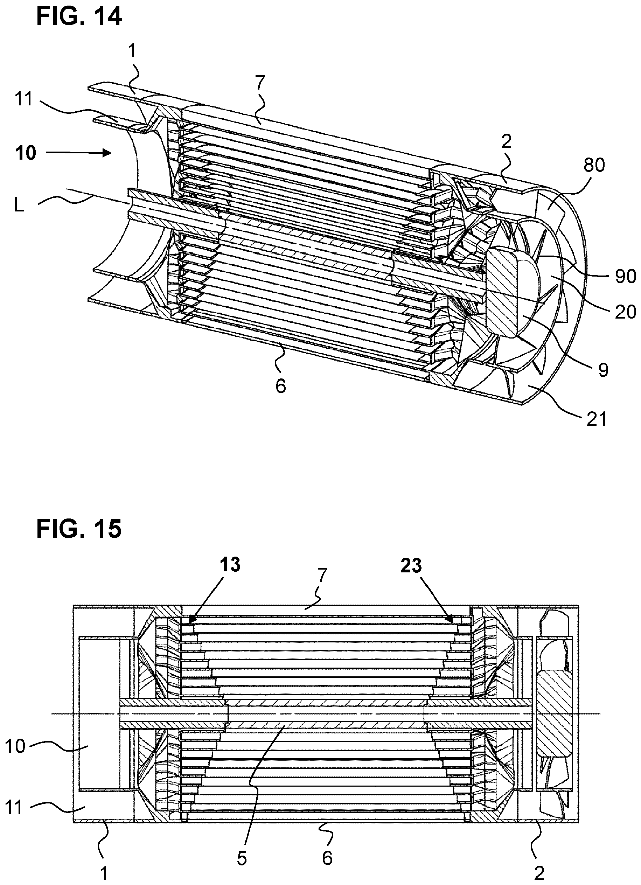

In der Ausführungsform gemäss den Figuren 14 und 15 sind beide Ventilatoren 8, 9 auf derselben Stirnseite der Vorrichtung angeordnet, vorzugsweise ebenfalls in konzentrischer Ausrichtung zur Längsachse L.

Wie bereits weiter oben erwähnt, lässt sich der Tauschkörper auf unterschiedliche Weise als Doppel- oder Mehrfachspirale ausbilden. In den oben beschriebenen Ausführungsformen wurden die zwei Materialbahnen 3, 4 zu einer Spirale mit kreisförmigen Querschnitt gewickelt, vorzugsweise mit gleichabständigen Spiralgängen und somit gleichbleibender Kanalbreite.

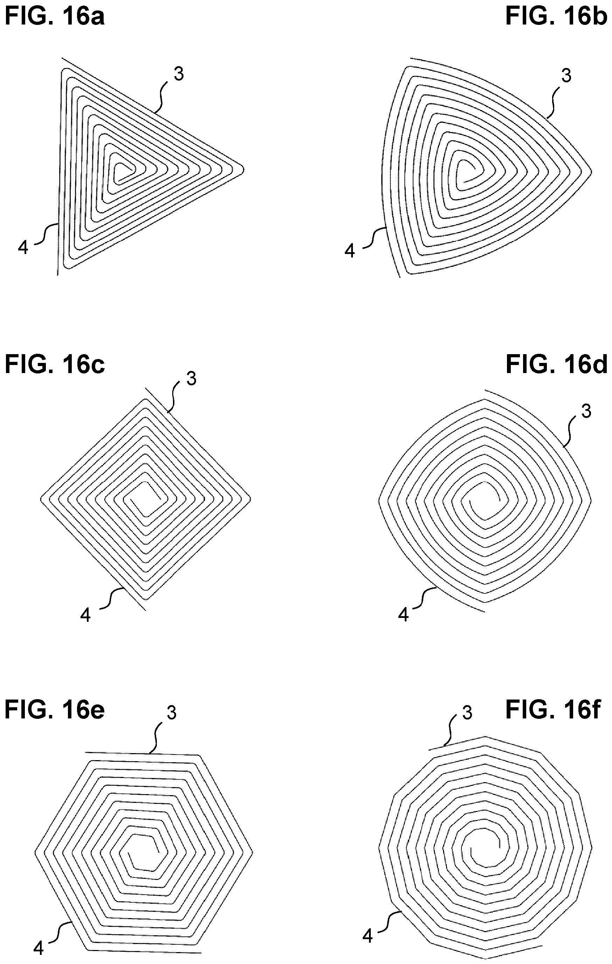

In den Figuren 16a bis 16f sind andere Ausführungsformen von Doppelspiralen dargestellt, gebildet durch die zwei Materialbahnen 3, 4. Die Doppelspiralen der zwei Endstücke 1, 2 sind analog ausgebildet, damit wiederum eine dichte Verbindung und die Ausbildung der gewünschten getrennten Kanäle 150, 151 stattfinden kann. In Figur 16a ist der Querschnitt ein Dreieck, vorzugsweise ein gleichseitiges Dreieck. Die Kanten sind vorzugsweise gebogen ausgebildet. In Figur 16b sind die Schenkel des Dreiecks nach aussen gebogen, dafür sind die Kanten vorzugsweise scharfkantig. Die Form der Kanten steht jedoch in keiner Beziehung zur Art und/oder Form der Schenkel. Der Kantenradius ist bei beiden Ausführungsformen gemäss den Figuren 16a und 16b vorzugsweise derselbe und er steht nicht in Relation zur gebogenen Fläche. Die gebogene Fläche hat den Vorteil, dass die einzelnen Flächen weniger zum Knittern und/oder Beulen neigen und sich so auch eine etwas grössere Tauscherfläche realisieren lässt.

Die Figuren 16c und 16d zeigen dieselben Variationen bei einem rechteckigen, vorzugsweis quadratischen Querschnitt.

Figur 16e zeigt eine Wicklung zu einem sechseckigen Querschnitt und Figur 16f zu einem 12-eckigen Querschnitt. Andere, auch nicht symmetrische Formen sind ebenfalls einsetzbar.

Vorzugsweise sind Abstandhalter vorhanden, um die Materialbahnen in einem gewünschten Abstand voneinander zu halten. Dies soll sicherstellen, dass die Kanalquerschnitte nicht zu stark variieren. Insbesondere bei strukturell nicht selbsttragenden Membranen mit ungenügender Steifigkeit sind derartige Vorkehrungen empfehlenswert, da sie beispielsweise je nach Strömungsverhältnisse den Abstand zueinander verändern könnten.

Diese Abstandhalter sind beispielsweise Stege, die entlang der Längsachse L der Tauschervorrichtung zwischen den Materialbahnen 3, 4 eingebracht sind. Dank der Anordnung der Stege in Längsrichtung ist die Fluidströmung nicht oder nur unwesentlich behindert, da die Fluidströmung ebenfalls in Längsachse L erfolgt.

Bevorzugt sind die Stege immer an derselben Stelle positioniert und damit im Querschnitt gesehen "aufeinandergestapelt" bzw. sie sind radial vom Zentrum weg verlaufend angeordnet. Im Falle eines polygonalen Querschnitts befinden sich die Stege vorzugsweise an den Ecken der Polygone.

Dank der Stege lassen sich auftretende Kräfte besser aufnehmen.

Die Stege verlaufen vorzugsweise annähernd über die gesamte Länge des Tauschkörpers. Sie sind durchgehend oder mit Unterbrechungen versehen. In anderen Ausführungsformen sind anstelle von Stegen punktuell Abstandhalter angebracht. Diese Abstandhalter sind beispielsweise auf den Materialbahnen verteilte Noppen. Auch die Noppen verlaufen vorzugsweise radial nach aussen, um so auftretende Kräfte an derselben Stelle nach innen bis zum Stab 5 aufzunehmen.

Die Abstandhalter sind je nach Ausführungsform bereits vor dem Aufwickeln der Materialbahnen 3, 4 auf den Bahnen aufgebracht oder sie sind ein integraler Bestandteil der Bahnen. In anderen Ausführungsformen werden die Abstandhalter während des Aufwickelns zwischen die Materialbahnen 3, 4 eingelegt.

Wie ebenfalls oben erwähnt, lassen sich auch die Ein- und Ausgänge 10, 11, 20, 21 der zwei Endstücke 1, 2 unterschiedlich ausbilden. Figur 17a zeigt die bereits gezeigte konzentrische kreisförmige Anordnung des Eingangs 10 und des Ausgangs 11. In Figur 17b ist der innere kreisförmige Eingang 10 azentrisch angeordnet. In Figur 17c sind der Ein- und der Ausgang 10, 11 ringförmig ausgebildet, jedoch vorzugsweise konzentrisch zueinander und konzentrisch zur Längsachse L. In der Mitte befindet sich ein Freiraum 17, der stirnseitig offen oder geschlossen ausgebildet sein kann. In Figur 17d sind sowohl der Eingang 10 wie auch der Ausgang 11 kreisförmig, so dass nun beidseitig ein Freiraum 17 vorhanden ist. Figur 17e zeigt eine halbkreisförmige Ausbildung des Ein- und des Ausgangs 10, 11. In Figur 17f ist die Stirnseite in vier oder mehr Sektoren unterteilt und es sind zwei oder mehr Eingänge 10 und zwei oder mehr Ausgänge 11 vorhanden. Dieselben Anordnungen lassen sich auch beim zweiten Endstück 2 verwenden.

Die verschiedenen Ausbildungen der Endstücke 1, 2 lassen sich beliebig miteinander kombinieren. Auch lassen sich beliebige Ausführungsformen von Doppelspiralen oder Mehrfachspiralen des Tauschkörpers mit beliebigen Ausbildungen der Endstücke 1, 2 kombinieren. Die Ausführung der Strömungsverteilung in den Endstücken wird dementsprechend angepasst.

In bevorzugten Ausführungsformen entspricht der Strömungswiderstand durch die Durchgangsöffnung 0, gebildet durch den Stab 5 sowie die zwei Stifte 12, 22, dem Strömungswiderstand durch die Kanäle 150, 151. Hierzu ist der innere Durchmesser der Durchgangsöffnung 0, d.h. seine lichte Weite, entsprechend gewählt.

Die Durchgangsöffnung bildet einen Bypass, vorzugsweise in Form eines zentralen Kanals. Dank dieses Bypasses lässt sich die Tauschervorrichtung ohne den Austausch von Wärme und/oder Feuchtigkeit betreiben. Dies lässt sich erreichen, indem ein erster Volumenstrom eines ersten Fluids durch einen der Kanäle 150, 151 geleitet wird und ein zweiter Volumenstrom eines zweiten Fluids durch die Durchgangsöffnung 0 geleitet wird. Das erste und das zweite Fluid können beispielsweise beide Luft oder Wasser sein.

Die Förderung des zweiten Volumenstromes durch die Durchgangsöffnung 0 erfolgt vorzugsweise mittels eines dritten Ventilators. Alternativ lässt sich der bereits beschriebene erste oder zweite Ventilator verwenden, wobei dieser erste bzw. zweite Ventilator alternierend oder wahlweise den zentralen Kanal und einen der zwei genannten Kanäle 150, 151 beaufschlagt. Vorzugsweise erfolgt diese alternierende oder wahlweise Nutzung mittels einer Umschaltvorrichtung, die den Volumenstrom in den gewünschten Kanal umlenkt.

Ein weiterer Vorteil dieses innenliegenden Bypasses bzw. der Durchgangsöffnung 0 ist, dass die Fertigung der Tauschervorrichtung vereinfacht wird. Die Materialbahnen 3, 4 lassen sich dank des vergrösserten Aussendurchmessers des Stabes 5 einfacher aufwickeln. Zudem verleiht der hohle Stab 5 der Tauschervorrichtung verbesserte strukturelle Eigenschaften..

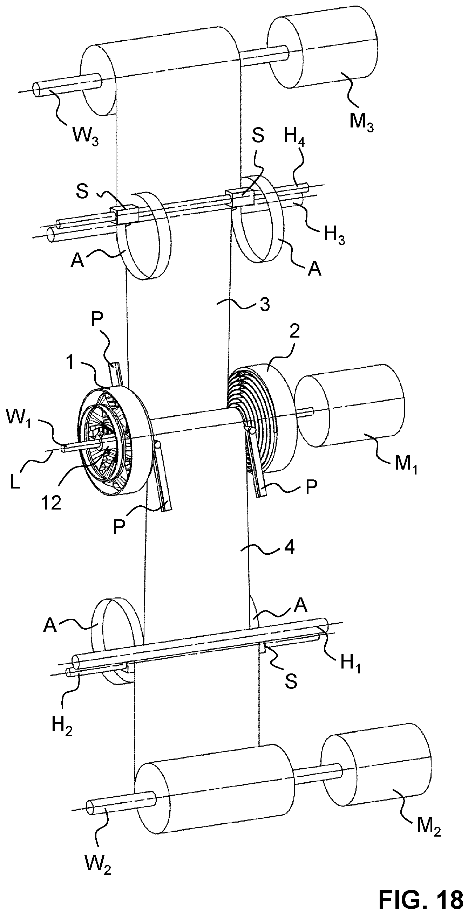

Wie bereits erwähnt, lässt sich die erfindungsgemässe Tauschervorrichtung auf unterschiedliche Weise herstellen. Sie kann beispielsweise einstückig oder mehrstückig im 3-D Druckverfahren oder mindestens teilweise im Spritzgussverfahren hergestellt werden. Anhand der Figur 18 wird jedoch ein erfindungsgemässes Verfahren beschrieben, das eine einfache und kostengünstige Produktion erlaubt.

Die zwei Endstücke 1, 2 sind ein- oder mehrteilig ausgebildet und sie werden als separate Bauteile hergestellt und bereitgestellt. Vorzugsweise sind sie im 3D- Druckverfahren, im Spritzgussverfahren oder einer anderen geeigneten Herstellungsart gefertigt.

Die zwei Endstücke 1,2 werden für den Zusammenbau der Tauschervorrichtung in einem vordefinierten Abstand zueinander auf eine gemeinsame erste Welle W₁ geschoben, wobei der Stab 5 zwischen ihnen angeordnet wird. Hierzu dient die bereits beschriebene Durchgangsöffnung O. Die Welle W₁ lässt sich mittels eines ersten Motors M, antreiben. Auf zwei gegenüberliegenden Seiten der ersten Welle W₁, hier oberhalb und unterhalb der ersten Welle W₁, ist eine zweite und eine dritte Welle W₂, W₃ vorhanden, welche ebenfalls vorzugsweise mittels eines zweiten und dritten Motors M₂, M₃ angetrieben sind. Eine hier nicht dargestellte Steuerung steuert und koordiniert die Bewegung der drei Motoren M₁, M₂, M₃. Auf der zweiten Welle W₂ ist eine Rolle mit der zweiten Materialbahn 4 angeordnet, auf der ersten Welle W₁ ist eine Rolle mit der ersten Materialbahn 3.

Zwischen den benachbarten Wellen W₁, W₂, W₃ sind vorzugsweise erste und zweite Führungsrollen H₁, H₂ bzw. dritte und vierte Führungsrollen H₃, H₄ sowie Schneidelemente S angeordnet. Die Führungsrollen H₁, H₂, H₃, H₄ führen die die Materialbahnen 3, 4 während des Aufwickelns. Die Schneidelemente S, beispielsweise Messer, schneiden die zugeführten geraden geraden Materialbahnen in die gewünschte konische Form. Die abgetrennten Materialstücke sind in Figur 18 mit dem Bezugszeichen A versehen.

Schweissdorne P im Bereich der Endstücke 1, 2 dienen dazu, die stirnseitigen Enden der Materialbahnen 3, 4 an die Spiralrippen 130, 131, 230, 231 der Endstücke 1, 2 zu fixieren.

Zu Beginn des Verfahrens werden die schmalen Enden 31, 41 der zwei Materialbahnen 3, 4 vorzugsweise an den Stab 5 befestigt. Anschliessend wird der erste Motor M₁ und gegebenenfalls auch die zwei anderen Motoren M₂, M₃ aktiviert und die Materialbahnen 3, 4 werden in der gewünschten Form um den Stab 5 gewickelt. Dabei geben die Spiralrippen 130, 131, 230, 231 der Endstücke 1, 2 die gewünschte Form und Abstand der einzelnen Spiralwindungen zueinander vor. Ist die gewünschte Doppelspirale erhalten, so lässt sich vorzugsweise noch eine Abdeckung zum Schutz des Tauschkörpers anbringen. Mittels desselben Verfahrens lassen sich auch mehr als zwei Materialbahnen gleichzeitig zu eine Mehrfachspirale wickeln.

Die erfindungsgemässe Vorrichtung ermöglicht die Ausbildung von Tauschervorrichtungen mit einem grossen Wirkungsgrad und trotzdem mit einem kleinen Aussendurchmesser. Zudem ist die Herstellung erleichtert.

**BEZUGSZEICHENLISTE**

| | | | |
|---|---|---|---|
| 1 | erstes Endstück | 41 | schmaleres Ende |
| 10 | erster Eingang | | |
| 11 | erster Ausgang | 5 | Stab |
| 110 | äusserer Ring | | |
| 111 | innerer Ring | 6 | erster Deckelteil |
| 12 | Stift | | |
| 13 | Doppelspirale | 7 | zweiter Deckelteil |
| 130 | erste Spiralrippen | | |
| 131 | zweite Spiralrippen | 8 | erster Ventilator |
| 14 | Verschluss | 80 | erste Ventilatorflügel |
| 15 | Zugang | 81 | erster Motor |
| 150 | erster Kanal | | |
| 151 | zweiter Kanal | 9 | zweiter Ventilator |
| 16 | Verteilerstruktur | 90 | zweite Ventilatorflügel |
| 17 | Freiraum | 91 | zweiter Motor |
| 2 | zweites Endstück | A | abgeschnittenes Material |
| 20 | zweiter Eingang | L | Längsachse |
| 21 | zweiter Ausgang | H₁ | erste Führungsrolle |
| 22 | Stift | H₂ | zweite Führungsrolle |
| 23 | Doppelspirale | H₃ | dritte Führungsrolle |
| 230 | erste Spiralrippen | H₄ | vierte Führungsrolle |
| 231 | zweite Spiralrippen | M₁ | erster Motor |
| 24 | Verschluss | M₂ | zweiter Motor |
| 25 | Zugang | M₃ | dritter Motor |
| 26 | Verteilerstruktur | O | Durchgangsöffnung |
| | | P | Schweissdorn |
| 3 | erste Materialbahn | S | Schneidelement |
| 30 | breiteres Ende | W₁ | erste Welle |
| 31 | schmaleres Ende | W₂ | zweite Welle |
| | | W₃ | dritte Welle |
| 4 | zweite Materialbahn | | |
| 40 | breiteres Ende | | |

## Patentansprüche

1. Tauschervorrichtung mit einem ersten Endstück (1), einem zweiten Endstück (2) und einem dazwischen angeordneten Tauschkörper (3, 4), wobei das erste Endstück (1) eine erste Stirnseite mit einem ersten Eingang (10) und einem ersten Ausgang (11) aufweist und das zweite Endstück (2) eine zweite Stirnseite mit einem zweiten Eingang (20) und einem zweiten Ausgang (21) aufweist, wobei die erste und zweite Stirnseite vom Tauschkörper abgewandt sind, und wobei der Tauschkörper mindestens einen ersten Kanal (150) aufweist, der den ersten Eingang (10) des ersten Endstücks (1) mit dem zweiten Ausgang (21) des zweiten Endstücks (2) verbindet, und wobei der Tauschkörper mindestens einen zweiten Kanal (151) aufweist, der den zweiten Eingang (20) des zweiten Endstücks (2) mit dem ersten Ausgang (11) des ersten Endstücks (1) verbindet, wobei der Tauschkörper eine Mehrfachspirale, insbesondere eine Doppelspirale, oder mehrere konzentrische Ringflächen ausbildet und die Windungen der Mehrfachspirale bzw. der konzentrischen Ringflächen Trennwände (3, 4) zwischen dem mindestens einen ersten und dem mindestens einen zweiten Kanal (150, 151) ausbilden, **dadurch gekennzeichnet, dass** das erste Endstück (1) als Fluidverteiler ausgebildet ist und eine Verteilerstruktur (16) zur Umlenkung eines ersten Fluids vom ersten Eingang (10) in den mindestens einen ersten Kanal (150) des Tauschkörpers aufweist
und/oder
dass das zweite Endstück (2) als Fluidverteiler ausgebildet ist und eine Verteilerstruktur (26) zur Umlenkung eines zweiten Fluids vom zweiten Eingang (20) in den mindestens einen zweiten Kanal (151) des Tauschkörpers aufweist.

2. Tauschervorrichtung nach Anspruch 1, wobei der Tauschkörper eine Längsrichtung (L) definiert, wobei die Endstücke (1, 2) an je einem stirnseitigen Ende des Tauschkörpers angeordnet sind und wobei der mindestens eine erste und der mindestens eine zweite Kanal (150, 151) in Längsrichtung (L) des Tauschkörpers durchströmbar sind.

3. Tauschervorrichtung nach einem der Ansprüche 1 oder 2, wobei das erste Endstück (1) eine der ersten Stirnseite gegenüberliegende dritte Stirnseite aufweist und wobei die Verteilerstruktur (16) auf der dritten Stirnseite eine Mehrfachspirale (13), insbesondere eine Doppelspirale, oder mehrere konzentrische Ringflächen bilden und/oder wobei das zweite Endstück (2) eine der zweiten Stirnseite gegenüberliegende vierten Stirnseite aufweist und wobei die Verteilerstruktur (26) auf der vierten Stirnseite eine Mehrfachspirale (23), insbesondere eine Doppelspirale, oder mehrere konzentrische Ringflächen bilden.

4. Tauschervorrichtung nach Anspruch 3, wobei die im ersten und/oder im zweiten Endstück (1, 2) ausgebildete Mehrfachspirale (13, 26) zu ihrer Mitte hin nach aussen vorsteht bzw. die konzentrischen Ringflächen zu ihrer Mitte hin nach aussen vorstehen.

5. Tauschervorrichtung nach Anspruch 4, wobei die im ersten und/oder im zweiten Endstück (1, 2) ausgebildete Mehrfachspirale (13, 23) bzw. die konzentrischen Ringflächen als Konus ausgebildet ist/sind und nach aussen vorsteht/vorstehen.

6. Tauschervorrichtung nach einem der Ansprüche 1 bis 5, wobei die Mehrfachspirale des Tauschkörpers durch mindestens zwei gemeinsam aufgewickelte Materialbahnen (3, 4) gebildet ist.

7. Tauschervorrichtung nach einem der Ansprüche 1 bis 6, wobei die Mehrfachspirale bzw. die konzentrischen Ringflächen des Tauschkörpers einen runden, dreieckigen, viereckigen, quadratischen, sechseckigen, achteckigen oder zwölfeckigen Querschnitt aufweist.

8. Tauschervorrichtung nach einem der Ansprüche 1 bis 7, wobei die Mehrfachspirale bzw. die konzentrischen Ringflächen des Tauschkörpers Windungen aufweist, die gekrümmt oder abschnittsweise geradlinig ausgebildet sind.

9. Tauschervorrichtung nach einem der Ansprüche 1 bis 8, der Tauschkörper eine Tauschfläche aufweist zum Austausch von Wärme und/oder Stoffen und die Tauschervorrichtung eine Durchgangsöffnung (0) aufweist, die sich vom ersten Endstück (1) durch den Tauscherkörper zum zweiten Endstück (2) erstreckt und die getrennt von der Tauschfläche verläuft.

10. Tauchervorrichtung nach einem der Ansprüche 1 bis 9, wobei zwischen zwei benachbarten Trennwänden Distanzhalter angeordnet sind.

11. Tauschervorrichtung nach einem der Ansprüche 1 bis 10, wobei die Mehrfachspirale bzw. die konzentrischen Ringflächen des Tauschkörpers aus mindestens einer Enthalpietauscher-Membran gebildet ist zwecks Rückgewinnung von Wärme und Luftfeuchtigkeit.

12. Tauschervorrichtung nach einem der Ansprüche 1 bis 11, wobei das erste und das zweite Endstück (1, 2) als separate Bauteile ausgebildet sind und beim Zusammenbau der Vorrichtung mit dem Tauschkörper (3, 4) verbindbar sind.

13. Tauschervorrichtung nach einem der Ansprüche 1 bis 12, wobei die Vorrichtung ein Wärmetauscher mit wärmedurchlässigen bzw. -übertragenden Wänden und/oder ein Stofftauscher mit stoffdurchlässigen Wänden ist.

14. Verfahren zur Herstellung einer Tauschervorrichtung gemäss einem der Ansprüche 1 bis 13, wobei das erste Endstück (1) und das zweite Endstück (2) in einem definierten Abstand zueinander angeordnet werden, wobei zur Bildung der Mehrfachspirale des Tauschkörpers mindestens eine erste Materialbahn (3) von einer ersten Seite und mindestens eine zweite Materialbahn (4) von einer zweiten Seite gemeinsam aufgewickelt werden und wobei die zwei stirnseitigen Enden der aufgewickelten Materialbahnen (3, 4) während oder nach dem Aufwickeln mit dem ersten und/oder dem zweiten Endstück (1, 2) verbunden werden.

## Claims

1. An exchanger device having a first end piece (1), having a second end piece (2), and having an exchanger body (3, 4) arranged therebetween, wherein the first end piece (1) has a first end side with a first inlet (10) and with a first outlet (11), and the second end piece (2) has a second end side with a second inlet (20) and with a second outlet (21), wherein the first and second end sides face away from the exchanger body, and wherein the exchanger body has at least one first channel (150) which connects the first inlet (10) of the first end piece (1) to the second outlet (21) of the second end piece (2), and wherein the exchanger body has at least one second channel (151) which connects the second inlet (20) of the second end piece (2) to the first outlet (11) of the first end piece (1), wherein the exchanger body forms a multiple spiral, in particular a double spiral, or multiple concentric ring surfaces, and the windings of the multiple spiral or of the concentric ring surfaces form separating walls (3, 4) between the at least one first and the at least one second channel (150, 151), **characterized in that** the first end piece (1) is configured as a fluid distributor and has a distribution structure (16) for diverting a first fluid from the first inlet (10) into the at least one first channel (150) of the exchanger body
and/or
the second end piece (2) is configured as a fluid distributor and has a distribution structure (26) for diverting a second fluid from the second inlet (20) into the at least one second channel (151) of the exchanger body.

2. The exchanger device as claimed in claim 1, wherein the exchanger body defines a longitudinal direction (L), wherein the end pieces (1, 2) are arranged on in each case one end-side end of the exchanger body, and wherein the at least one first and the at least one second channel (150, 151) can be flowed through in the longitudinal direction (L) of the exchanger body.

3. The exchanger device as claimed in either of claims 1 and 2, wherein the first end piece (1) has a third end side, which is situated opposite the first end side, and wherein the distribution structure (16) forms a multiple spiral (13), in particular a double spiral, or multiple concentric ring surfaces on the third end side, and/or wherein the second end piece (2) has a fourth end side, which is situated opposite the second end side, and wherein the distribution structure (26) forms a multiple spiral (23), in particular a double spiral, or multiple concentric ring surfaces on the fourth end side.

4. The exchanger device as claimed in claim 3, wherein the multiple spiral (13, 26) formed in the first and/or in the second end piece (1, 2) projects outward toward its center, or the concentric ring surfaces project outward toward their center.

5. The exchanger device as claimed in claim 4, wherein the multiple spiral (13, 23) formed in the first and/or in the second end piece (1, 2) or the concentric ring surfaces are/is in the form of a cone and project(s) outward.

6. The exchanger device as claimed in one of claims 1 to 5, wherein the multiple spiral of the exchanger body is formed by at least two material webs (3, 4) which are wound up together.

7. The exchanger device as claimed in one of claims 1 to 6, wherein the multiple spiral or the concentric ring surfaces of the exchanger body has/have a round, triangular, quadrangular, square, hexagonal, octagonal or dodecagonal cross section.

8. The exchanger device as claimed in one of claims 1 to 7, wherein the multiple spiral or the concentric ring surfaces of the exchanger body have windings which are curved or sectionally rectilinear.

9. The exchanger device as claimed in one of claims 1 to 8, the exchanger body having an exchange/transfer surface for exchange of heat and/or transfer or mass, and the exchanger device having a passage opening (0) which extends from the first end piece (1) to the second end piece (2) through the exchanger body and which runs separately from the exchange/transfer surface.

10. The exchanger device as claimed in one of claims 1 to 9, wherein spacers are arranged between two adjacent separating walls.

11. The exchanger device as claimed in one of claims 1 to 10, wherein the multiple spiral or the concentric ring surfaces of the exchanger body is/are formed from at least one enthalpy-exchanger membrane, for the purpose of recovering heat and air moisture.

12. The exchanger device as claimed in one of claims 1 to 11, wherein the first and the second end piece (1, 2) are formed as separate components, and can be connected to the exchanger body (3, 4) during the assembly of the device.

13. The exchanger device as claimed in one of claims 1 to 12, wherein the device is a heat exchanger with heat-permeable or heat-transferring walls and/or a mass-transfer device with substance-permeable walls.

14. A method for producing an exchanger device as claimed in one of claims 1 to 13, wherein the first end piece (1) and the second end piece (2) are arranged at a defined distance from one another, wherein, for forming the multiple spiral of the exchanger body, at least one first material web (3), from a first side, and at least one second material web (4), from a second side, are wound up together, and wherein the two end-side ends of the wound-up material webs (3, 4) are connected to the first and/or to the second end piece (1, 2) during or after the winding.

## Revendications

1. Dispositif échangeur comprenant une première pièce d'extrémité (1), une deuxième pièce d'extrémité (2) et un corps d'échangeur (3, 4) disposé entre elles, la première pièce d'extrémité (1) présentant une première face frontale avec une première entrée (10) et une première sortie (11) et la deuxième pièce d'extrémité (2) présentant une deuxième face frontale avec une deuxième entrée (20) et une deuxième sortie (21), la première et la deuxième faces frontales étant opposées au corps d'échangeur, et le corps d'échangeur présentant au moins un premier canal (150), qui relie la première entrée (10) de la première pièce d'extrémité (1) à la deuxième sortie (21) de la deuxième pièce d'extrémité (2), et le corps d'échangeur présentant au moins un deuxième canal (151) qui relie la deuxième entrée (20) de la deuxième pièce d'extrémité (2) à la première sortie (11) de la première pièce d'extrémité (1), le corps d'échangeur formant une spirale multiple, en particulier une double spirale, ou plusieurs surfaces annulaires concentriques et les spires de la spirale multiple ou des surfaces annulaires concentriques étant reliées entre elles, des surfaces annulaires concentriques formant des parois de séparation (3, 4) entre ledit au moins un premier canal et ledit au moins un deuxième canal (150, 151), **caractérisé, en ce que** la première pièce d'extrémité (1) est réalisée sous forme de distributeur de fluide et présente une structure de distributeur (16) pour dévier un premier fluide de la première entrée (10) dans ledit au moins un premier canal (150) du corps d'échangeur
et/ou
**en ce que** la deuxième pièce d'extrémité (2) est réalisée sous forme de distributeur de fluide et présente une structure de distributeur (26) pour dévier un deuxième fluide de la deuxième entrée (20) dans ledit au moins un deuxième canal (151) du corps d'échangeur.

2. Dispositif échangeur selon la revendication 1, dans lequel le corps d'échangeur définit une direction longitudinale (L), dans lequel les pièces d'extrémité (1, 2) sont disposées chacune à une extrémité frontale du corps d'échangeur et dans lequel ledit au moins un premier et ledit au moins un deuxième canal (150, 151) sont aptes à être traversés dans la direction longitudinale (L) du corps d'échangeur.

3. Dispositif échangeur selon l'une des revendications 1 ou 2, dans lequel la première pièce d'extrémité (1) présente une troisième face frontale opposée à la première face frontale et dans lequel la structure de distribution (16) forme sur la troisième face frontale une spirale multiple (13), notamment une double spirale, ou plusieurs surfaces annulaires concentriques et/ou dans lequel la deuxième pièce d'extrémité (2) présente une quatrième face frontale opposée à la deuxième face frontale et dans lequel la structure de distribution (26) forme sur la quatrième face frontale une spirale multiple (23), notamment une double spirale, ou plusieurs surfaces annulaires concentriques.

4. Dispositif échangeur selon la revendication 3, dans lequel la spirale multiple (13, 26) formée dans la première et/ou la deuxième pièce d'extrémité (1, 2) fait saillie vers l'extérieur en direction de son centre ou les surfaces annulaires concentriques font saillie vers l'extérieur en direction de leur centre.

5. Dispositif échangeur selon la revendication 4, dans lequel la spirale multiple (13, 23) ou les surfaces annulaires concentriques formées dans la première et/ou dans la deuxième pièce d'extrémité (1, 2) sont réalisées sous forme de cône(s) et font saillie vers l'extérieur.

6. Dispositif échangeur selon l'une des revendications 1 à 5, dans lequel la spirale multiple du corps d'échangeur est formée par au moins deux bandes de matériau (3, 4) enroulées ensemble.

7. Le dispositif échangeur selon l'une des revendications 1 à 6, dans lequel la spirale multiple ou les surfaces annulaires concentriques du corps d'échangeur présentent une section transversale ronde, triangulaire, quadrangulaire, carrée, hexagonale, octogonale ou dodécagonale.

8. Dispositif échangeur selon l'une des revendications 1 à 7, dans lequel la spirale multiple ou les surfaces annulaires concentriques du corps d'échangeur présentent des spires qui sont courbes ou rectilignes par sections.

9. Dispositif échangeur selon l'une des revendications 1 à 8, le corps d'échangeur présentant une surface d'échange pour l'échange de chaleur et/ou de substances et le dispositif échangeur présentant une ouverture de passage (0) qui s'étend de la première pièce d'extrémité (1) à travers le corps d'échangeur jusqu'à la deuxième pièce d'extrémité (2) et qui s'étend séparément de la surface d'échange.

10. Dispositif échangeur selon l'une des revendications 1 à 9, dans lequel des entretoises sont disposées entre deux cloisons adjacentes.

11. Dispositif échangeur selon l'une des revendications 1 à 10, dans lequel la spirale multiple ou les surfaces annulaires concentriques du corps d'échangeur sont formées d'au moins une membrane échangeuse d'enthalpie en vue de la récupération de la chaleur et de l'humidité de l'air.

12. Dispositif échangeur selon l'une des revendications 1 à 11, dans lequel la première et la deuxième pièce d'extrémité (1, 2) sont conçues sous forme de composants séparés et sont aptes à être reliées au corps d'échangeur (3, 4) lors de l'assemblage du dispositif.

13. Dispositif échangeur selon l'une quelconque des revendications 1 à 12, dans lequel le dispositif est un échangeur de chaleur comportant des parois perméables à la chaleur ou transmettant la chaleur et/ou un échangeur de matière à parois perméables à la matière.

14. Procédé de fabrication d'un dispositif échangeur selon l'une des revendications 1 à 13, dans lequel la première pièce d'extrémité (1) et la deuxième pièce d'extrémité (2) sont disposées à une distance définie l'une de l'autre, dans lequel, pour former la spirale multiple du corps d'échangeur, au moins une première bande de matériau (3) est enroulée à partir d'un premier côté et au moins une deuxième bande de matériau (4) est enroulée à partir d'un deuxième côté, et dans lequel les deux extrémités avant des bandes de matériau (3, 4) enroulées sont reliées à la première et/ou à la deuxième pièce d'extrémité (1, 2) pendant ou après l'enroulement.
